## Europäisches Patentamt
## European Patent Office
## Office européen des brevets

(11) Publication number: **0 134 343**
**B1**

# EUROPEAN PATENT SPECIFICATION

(45) Date of publication of patent specification: **09.11.88**

(51) Int. Cl.⁴: **B 29 B 13/02, B 29 B 13/04, B 29 B 7/12** // B29K27/06

(21) Application number: **83304865.5**

(22) Date of filing: **23.08.83**

(54) Process for preparing polymer resins and blends with high packing densities.

(43) Date of publication of application:
**20.03.85 Bulletin 85/12**

(45) Publication of the grant of the patent:
**09.11.88 Bulletin 88/45**

(84) Designated Contracting States:
**CH DE FR GB IT LI**

(56) References cited:
**BE-A- 661 031**
**FR-A-2 442 075**
**GB-A- 964 786**
**US-A-3 229 002**
**US-A-3 554 274**

(73) Proprietor: **SYNERGISTICS INDUSTRIES LIMITED/LES INDUSTRIES SYNERGISTICS LIMITEE**
**Suite 920 5915 Airport Rd.**
**Mississauga Ontario, Canada L4V 1T1 (CA)**

(72) Inventor: **Crocker, Zenas**
**P.O. Box 2065 Oyster Harbors**
**Osterville Massachusetts, 02655 (US)**
Inventor: **Wise, David V.**
**1795 Deserables**
**St. Bruno Québec (CA)**

(74) Representative: **Warden, John Christopher et al**
**R.G.C. Jenkins & Co. 12-15, Fetter Lane**
**London EC4A 1PL (GB)**

Courier Press, Leamington Spa, England.

**Description**

The present invention relates to polymeric resins and blends. More specifically, the invention relates to dry blending suitable rigid polyvinyl chloride (PVC) compounds or polyethylene resins in powder form with or without additives to produce rigid PVC blends or polyethylene resins and/or blends or compositions having increased packing densities.

Rigid plastic products such as pipe, siding and other shapes may be made from polyvinyl chloride by first dry blending PVC resins and additives in powder form and then feeding the blended powders into an extruder or other processing device to fully flux the material for forming into the end product. Other products can be made from polyethylene resins, such as linear low-density polyethylene (LLDPE), generally in powder form with or without additives. The blending of the resins with any required additives is generally performed by mechanical stirring devices, such as a high intensity mixer, which provides sufficient intensive mixing to raise the temperature of the mix well above the softening point of the resins. The mix is then cooled under agitation and a powder ready for the extrusion process is obtained. The temperature of the mix, however, should not be raised to a point where agglomeration commences.

The agitation in the blending step is sufficiently thorough to ensure dispersion even in small quantities of the additives with resin powders. The maximum temperature of the mix during the blending step is sufficient to ensure melting and absorption of certain ingredients by the resin. The temperature is not raised high enough to create fusing and agglomeration that sometimes occur under mixing conditions at higher temperatures. The hot powder mix is discharged into a cooling vessel whose impeller speed is sufficient to prevent agglomeration and whose cooling surface to volume relationship has been maximized. The powder must be cooled to a sufficiently low temperature to avoid subsequent caking in storage silos or packaged units.

The conversion of the dry blended powder into a final product is generally achieved in an extruder. One of the more important characteristics of such machines is the relatively positive material pumping action from the feed section through the shaping die. In effect, the machine output rate is, other conditions being equal, controlled by the rate of material fed to it. Since the extrusion screw geometry presents a particular volume per unit time to the incoming material, the rate in mass/unit time for a given screw speed is dependent upon the density of the material in mass/unit volume.

The density of a powder can be expressed in two different ways, the bulk density and the packing density. The packing density is measured by pouring a known weight of the powder into a graduated measuring cylinder and tapping in a defined manner to a steady state. After tapping the volume of the material is read and the packing density calculated from the formula:

$$\text{packing density} = \frac{\text{sample weight in grams}}{\text{volume in cubic centimeters}}$$

It is possible by varying polymerization conditions to make various particle shapes and change the average porosity of a PVC resin, since each particle is made up of a porous agglomeration of much smaller primary particles. Then during a blending sequence, additives can diffuse into and partially fill the spaces between the primary particles. Furthermore, the rough edges of the particles tend to be rounded off by friction one against the next. Both these effects tend to raise the packing density of the powder. Other additives can have different particle sizes and specific gravity than PVC resins, and can interspace between the resin particles thereby affecting the packing density of the resin powder mix. As well as affecting packing density, it is found that the particle size distribution of the powder is changed.

In the past it has been found that there are practical limits to which such methods have been able to raise the packing density of dry blends. A typical PVC siding material powder blend with a high titanium dioxide content exhibits, after conventional dry blending, a packing density of about 0.65 gm/cc using suspension PVC resin. Packing density for LLPDE granular resins are typically about 0.44 gm/cc.

It has also been shown that packing densities in dry blends affect the output rate from a twin screw extruder and certain types of single screw extruders. Higher packing density blends produce higher extrusion rates. If the packing density can be increased in the order of 6—7 percent then the production rate of the extruder could be increased by about the same percentage.

We have found that packing densities in polymeric resins and blends can be increased in a two step process. The first step is a mixing and heating step and occurs in a high intensity mixer wherein blade tip speeds are in excess of about 25 meters per second. The second step is a cooling step which also occurs in a high intensity mixer at blade tip speeds below about 16 meters per second.

We have also found that the packing density of a powder blend of rigid polyvinyl chloride resin with stabilizer and lubricant additives can be increased by about 15 to 35 percent over the base packing density of the standard or base blends. Throughout the specification and claims reference is made to "base" packing density. This term refers to the packing density in polymeric resins and blends when made by conventional known methods.

From US—A—4230615, GB—A—2038194 and EP—A—28536 a process is known for the manufacture of a particulate polymeric resin blend suitable for forming plastic articles in which a particulate composition comprising a thermoplastic polymeric resin is mixed and thermokinetically heated in a high intensity mixer having a plurality of blades attached to rotating arms to effect blending of the material and heating thereof to an elevated temperature below commencement of agglomeration of the particulate composition, and in which the blended and heated particulate composition is cooled in a mixer to a temperature at which the particulate composition can be stored without agglomeration.

By 'high intensity mixer' is meant a mixer having blades attached to rotating arms capable of blade tip speeds up to at least 45 meters per second and capable of heating polymer blends to at least 160°C in less than 30 seconds.

By 'thermokinetic heating' is meant that heating results from the internal friction caused by the action of the rotating blades striking and impelling the particles to impact on the internal surfaces and other particles.

US—A—3554274 describes a centrifugal heating-mixing apparatus designed to operate in a three step cycle at possible rotational speeds of 20—40 m/s. This is attached to a cooling mixer fitted with a cooling jacket and blades designed to rotate at possible speeds of 5—10 m/s. No details of use are given.

The invention is characterised in that, in a process as described in relation to US—A—4230615, during the heating cycle the mixer arms are caused to rotate at a blade tip speed of at least 25 meters per second for a heating period of less than 30 seconds, and the blended and heated particulate composition is then cooled for less than 100 seconds in a high intensity mixer with blades attached to arms rotating in said mixer, said arms being rotated at a blade tip speed of not more than 16 meters per second, whereby the particulate cooled polymeric resin blend has a high packing density.

In the text which follows, the following are acknowledged as Trade Marks: Gelimat, Advastab, Acyloid, Omylite, Blendex, Titanox, Welex.

The resin is preferably rigid polyvinyl chloride and in a preferred embodiment the temperature to which the batch is mixed and heated is below 200°C and the temperature to which the batch is cooled is below 60°C. The blade tip speed is preferably in the range of about 25 to 45 meters per second for the mixing and heating step.

In other embodiments, the particulate resin blend comprises at least one additive selected from the group consisting of processing aids, lubricants, stabilizers, antioxidants, impact modifiers, fillers and pigments. The mixing and heating step is preferably less than about 20 seconds and the cooling step is preferably less than about 40 seconds. In a preferred embodiment the mixing and heating step and cooling step occur in the same high intensity mixer.

It has been found that the process of this invention works with rigid PVC compositions and polyethylene granular resins with or without additions. Certain flexible PVC compositions do not show much increase in packing density when processed by the method of this invention. Furthermore, polypropylene resin powders do not show any significant increase in packing density when processed according to the present invention.

In the case of powder blends of suitable thermoplastic polymeric resins, additives may be added such as for example processing aids, lubricants, stabilizers, anti-oxidants, impact modifiers, fillers and pigments either in liquid, flake or powder form. In some cases, particularly when additives are included, a preblending step may take place before producing the high packing density blend. The purpose of the preblending step is only to disperse the ingredients evenly throughout the mix in order to feed batches with the proper ingredient proportions.

Batches of the mix with or without additives or preblending are then successively charged to a high intensity mixer with tip speeds above about 25 meters per second. The Gelimat (T.M.) made by Draiswerke GmbH is one example of a high intensity mixer satisfactory for operating the present process. In a preferred embodiment, the Gelimat high intensity mixer is fitted with a system for monitoring the temperature of the batch in the mixer separately from the temperature of the mixer walls and blades, and then discharging the batch from the mixer when the batch temperature reaches a predetermined level. Such a system is disclosed in U.S. patent 4,230,615. The energy from the high speed rotating blades in the mixer body thermokinetically heats the material at a rate dependent upon the size of the batch, the body temperature of the mixer, the formulation of the material and the tip speed and configuration of the rotating blades. It has been found that tip speeds above about 25 meters per second are advantageous and tip speeds as high as 45 meters per second may be used. The mixing and heating step is controlled so that the batch is discharged or the mixer is slowed down when the batch reaches the desired temperatures. The temperature of the batch controls the mixing and heating cycle. The conditions in the high intensity mixer are chosen to achieve high mixing rates with total heating times of less than 30 seconds. With such a high intensity mixer, high production rates are possible with modestly sized equipment due to the rapid cycles of the mixing step.

After the mixing and heating step, when the temperature of the batch is still high, it is necessary to cool the mix immediately, otherwise agglomerization occurs and the material cannot satisfactorily be stored. Therefore, the mix from the high intensity mixer can be discharged into a second high intensity mixer having a water jacket surrounding the body of the mixer. The mixer may be of the same design as that used for the mixing and heating step, but rotating at a tip speed having about 16 meters per second or less to provide a cooling step. The tip speed should not drop too far below this figure, otherwise the high packing densities are not attained. The cooling medium is preferably water which is circulated through the cooling

**0 134 343**

jacket. The length of time for the cooling step is sufficient for the batch to be cooled to a temperature where the product may be stored without agglomeration occurring. As in the case of the mixing and heating cycle, the rate of cooling is a function of the temperature of the batch, cooling capacity available, mixer size, batch size and tip speed. When the batch cools to a predetermined temperature, less than about 60°C for a rigid PVC resin, the batch is automatically discharged and may be stored in this condition until it is needed to be processed into finished articles. The time delay between the mixing and heating step and cooling step is preferably about a second or less, although longer time periods may occur.

In another embodiment a single high intensity mixer is used for the mixing step and cooling step. The mixer has a cooling jacket and water may be circulated through the cooling jacket at all times, even during the mixing and heating step. Alternatively, water may be circulated through the cooling jacket during the cooling step only. Once the mixing and heating step is completed, the tip speed of the mixer blades is immediately reduced to around 16 meters per second, or just below, and water circulated through the cooling jacket.

Packing densities of powders mixed by this process are generally increased. In the case of a powder blend of rigid polyvinyl chloride resin with stabilizer and lubricant additives, packing densities in the range of about 15 to 35 percent are achieved over powder blends obtained by conventional processes.

Example 1

In order to determine the increased packing density of rigid polyvinyl chloride resin and different additives, samples were prepared for a basic formulation, plus a low level and high level of additive according to the following as shown in Table I.

TABLE I

| Composition | Base | Low level | High level |
|---|---|---|---|
| | (gms) | (gms) | (gms) |
| PVC resin in powder form (Esso 366) | 3800 | 3600 | 3300 |
| Stabilizer:<br>Methyl tin ("Advastab TM-692 Carstab Corp.) | 38 | 36 | 33 |
| Lubricants<br>Calcium stearate | 38 | 36 | 33 |
| High melting hydrocarbon wax (1262, International Waxes Ltd.) | 38 | 36 | 33 |
| Polyethylene (629 A, Allied Chemical) | 7.6 | 7.2 | 6.6 |
| Processing aid<br>Acrylic polymer powder ("Acryloid K-120 N, Rohm & Haas) | 38 | 36 | 33 |
| Additive | — | 216 | 495 |
| Total weight | 3959.6 | 3967.2 | 3933.6 |
| % of additive by weight | — | 5.4% | 12.6% |

Three different types of additives were tested for both low and high levels. The additives were a calcium carbonate filler, (Omylite 95T Plüss-Stamfer AG), an ABS thermoplastic resin impact modifier, (Blendex 311 Borg Warner) and a pigment, titanium dioxide, (Titanox 2101 Canadian Titanium Pigments Ltd.).

In order to determine the packing density of these samples when processed by conventional methods, a first series of tests were run on a Welex Papenmeier mixer having a blade tip speed of 20 meters per second. The batches were heated to 120°C and 140°C before being discharged. For the lower temperature, the time in the mixer was in the range of 12 to 15 minutes and for the high temperature the time was approximately 18 minutes. The resin was added first and the additives added as the temperature of the batch slowly increased. The packing densities of the samples are shown in Table II.

4

TABLE II

| Sample | S.G. | Welex →120°C tray cool P.D. | Welex →140°C tray cool P.D. | Gelimat→140°C ribbon mix cool | | Gelimat→140°C Gelimat cool | | Gelimat→160°C Gelimat cool | |
|---|---|---|---|---|---|---|---|---|---|
| | | | | P.D. | % Incr. | P.D. | % Incr. | P.D. | % Incr. |
| Base | 1.379 | 0.625 | — | 0.685 | 9.6 | 0.710 | 13.6 | 0.735 | 17.6 |
| Base & low filler | 1.417 | 0.649 | — | 0.695 | 7.1 | 0.745 | 14.8 | 0.833 | 28.3 |
| Base & high filler | 1.471 | 0.704 | — | 0.775 | 10.1 | 0.820 | 16.5 | 0.877 | 24.6 |
| Base & low modifier | 1.348 | 0.625 | — | 0.650 | 4.0 | 0.680 | 8.8 | 0.769 | 23.0 |
| Base & high modifier | 1.310 | 0.595 | — | 0.615 | 3.4 | 0.695 | 16.8 | 0.794 | 33.4 |
| Base & low $TiO_2$ | 1.435 | 0.658 | — | 0.680 | 2.3 | 0.750 | 14.0 | 0.862 | 31.0 |
| Base & high $TiO_2$ | 1.507 | 0.725 | 0.725 | 0.745 | 2.8 | 0.785 | 8.3 | 0.926 | 27.7 |

**0 134 343**

Tests were then carried out on the same compositions using a Gelimat high intensity mixer. The batches were all preblended in a ribbon blender and then charged into the Gelimat mixer which was fitted with a control system for monitoring the batch temperature in the mixer separately from the mixer temperature. The mixer had a blade tip speed of about 32 meters per second. The batches were mixed and heated in the mixer to temperatures of 140°C and 160°C. For the first temperature the mixing time was about 25 seconds and a few seconds longer for the second temperature. In one series of tests the batch was then cooled in a Ribbon blender and in another series of tests the batch was cooled in a second Gelimat mixer which was water cooled. The second Gelimat had a blade tip speed of about 16 meters per second and the batch remained in the mixer for a time ranging from about 40 to 100 seconds before being discharged at a temperature below 60°C.

The packing density of each sample was determined and is shown in Table II. The increase in packing density over the product made by the conventional process is shown as a percentage in the Table. For the Ribbon mix cool samples the increase is in the range of 2 to 10 percent, for the Gelimat cool the range was 7 to 17 percent when the batch was heated to 140°C and 15 to 35 percent when heated to 160°C.

Example 2

One hundred and fifty pounds of a rigid PVC powder compound, containing 12 percent $TiO_2$ and 5.5 percent polymeric modifiers, was preblended in a Ribbon blender and batches were then charged into a Gelimat high intensity mixer having a cooling jacket surrounding it. Initially, water was not circulating through the jacket. The mixer was fitted with a control system to monitor the batch temperature separately from the mixer temperature, and was arranged to stop the mixing and heating step when the batch temperature reached a predetermined level.

In the mixing and heating step the mixer had a blade tip speed of about 31 meters per second. The batch size was 375 grams and it was found that the time to reach 120°C in the mixing step varied from 13 to 20 seconds. As soon as the mixing step was completed, cooling water was circulated through the jacket, and the tip speed of the blades was reduced to about 13.8 meters per second. Each batch remained in the mixer for approximately 90 seconds during the cooling step until the temperature of the batch dropped below 60°C to reach a preselected temperature at which time the batch was discharged.

The packing densities of the resulting material ranged from 0.88 to 0.95 grams/cc, which is an increase in packing density over material processed in a conventional blender, such as a Welex mixer.

Example 3

A sample of a rigid PVC pipe compound was prepared according to the process of Example 2 and compared with a similar sample produced in a Henschel mixer. Both samples were subsequently extruded in a twin screw extruder to form a 3 inch pressure pipe. The powder density of the compound produced in the Henschel mixer was 0.59 grams/cc compared with 0.66 grams/cc produced in the Gelimat. The increase in production rate through the extruder was 12.8 percent which was at least partially associated with the higher packing density of the material. There was also an improvement in the impact and tensile strength of the pipe.

Example 4

A linear low-density polyethylene powder having a melt flow index of 5 was processed in the same manner as Example 2. At the end of the mixing and heating step, the temperature of the batch was in the range of 108 to 110°C, and it was found that after cooling in the mixer at the lower tip speed, the packing density increased from 0.44 to 0.58 grams/cc, an increase of up to 32 percent.

Further tests were carried out at a range of blade tip speeds for the mixing and heating step, the range included 23, 30, 31.3, 33.6 and 38 meters per second, and for the cooling step, the speed range was 13.8 and 16 meters per second.

Example 5

In a further test 160 grams of linear low-density polyethylene powder having a melt flow index of 5, at a temperature of 55°C was fed into a Gelimat mixer having a blade tip speed of 30 meters per second. The batch was mixed and heated to a temperature of 110°C in 22 seconds. The cooling cycle took place in the same mixer at a blade tip speed of 13.8 meters per second and cooling water circulating in the mixer jacket. The batch was discharged after 27 seconds. The packing density of the processed batch was 0.538 grams/cc compared with a packing density of 0.472 grams/cc prior to the process step showing an increase in packing density of 14%.

Example 6

A 120 gram sample of a molding grade of a low density polyethylene powder having a melt flow index of 5, was fed to a Gelimat mixer having a blade tip speed of 31.3 meters per second. The batch was heated to 110°C in approximately 15 seconds, and then cooled in the same manner as Example 4. The packing density of the processed batch was 0.532 grams/cc as compared to 0.424 grams/cc of the untreated powder. Thus an increase in packing density of 26 percent was obtained.

6

Example 7

Further tests were done on the base composition defined in Table I by the addition of increased weights of additives. 20 percent of a filler, Omylite 95T, was added and processed in a Gelimat with a discharge temperature of 160°C. In one case the sample was cooled in a Ribbon blender and in a second case in a Gelimat. Both tests produced a packing density of 0.909 grams/cc.

The same tests were run on the base composition with 40% by weight of an impact modifier (Blendex 311) to produce a packing density of 0.532 grams/cc on the Ribbon blender cool and 0.695 on the Gelimat cool. With 20 percent by weight of titanium dioxide (Titanox 2101) the Ribbon blender cool gave a packing density of 0.926 grams/cc and the Gelimat cool gave a packing density of 0.971 grams/cc.

## Claims

1. A process for the manufacture of a particulate polymeric resin blend suitable for forming plastic articles in which a particulate composition comprising a thermoplastic polymeric resin is mixed and thermokinetically heated in a high intensity mixer having a plurality of blades attached to rotating arms to effect blending of the material and heating thereof to an elevated temperature below commencement of agglomeration of the particulate composition, and in which the blended and heated particulate composition is cooled in a mixer to a temperature at which the particulate composition can be stored without agglomeration, characterised in that:

during the heating cycle the mixer arms are caused to rotate at a blade tip speed of at least 25 meters per second for a heating period of less than 30 seconds, and the blended and heated particulate composition is then cooled for less than 100 seconds in a high intensity mixer with blades attached to arms rotating in said mixer, said arms being rotated at a blade tip speed of not more than 16 meters per second, whereby the particulate cooled polymeric resin blend was a high packing density.

2. The process according to claim 1 wherein said resin comprises rigid polyvinyl chloride.

3. The process according to claim 2 wherein the temperature to which said batch is mixed and heated is below 200°C and the temperature to which said batch is cooled is below about 60°C.

4. The process according to claim 1 wherein the blade tip speed is in the range of about 25 to 45 meters per second for the mixing and heating step.

5. The process according to claim 1 or claim 2 wherein said particulate resin blend comprises at least one additive selected from the group consisting of processing aids, lubricants, stabilizers, antioxidants, impact modifiers, fillers and pigments.

6. The process according to claim 1 wherein the mixing and heating step is less than about 20 seconds.

7. The process according to claim 1 wherein the cooling step is less than about 40 seconds.

8. The process according to claim 1 wherein the mixing and heating step and cooling step occur in the same high intensity mixer.

## Patentansprüche

1. Verfahren zur Herstellung einer teilchenförmigen, polymeren Harzmischung, die zur Bildung von Kunststoffteilen geeignet ist, bei dem eine teilchenförmige Masse, die ein thermoplastisches polymers Harz enthält, in einem Hochleistungs-Mischer mit mehreren bzw. vielen Schaufeln, die an rotierenden Armen angebracht sind, gemischt und thermokinetisch erhitzt wird, um zu veranlassen, daß das Material gemischt und auf eine erhöhte Temperatur unterhalb des Beginns der Agglomeration der teilchenförmigen Masse erhitzt wird und bei dem die gemischte und erhitzte teilchenförmige Masse in einem Mischer auf eine Temperatur abgekühlt wird, bei der die teilchenförmige Masse ohne Agglomeration gelagert werden kann, dadurch gekennzeichnet, daß

die Mischerarme während des Erhitzungszyklus für eine Erhitzungsdauer von weniger als 30 s mit einer Schaufelenden-Geschwindigkeit von mindestens 25 m/s rotieren gelassen werden und die gemischte und erhitzte teilchenförmige Masse dann weniger als 100 s lang in einem Hochleistungs-Mischer mit Schaufeln, die an Armen, die in dem erwähnten Mischer rotieren, angebracht sind, abgekühlt wird, wobei die erwähnten Arme mit einer Schaufelenden-Geschwindigkeit von nicht mehr als 16 m/s rotieren gelassen werden, wodurch die abgekühlte teilchenförmige, polymere Harzmischung eine hohe Packungsdichte hat.

2. Verfahren nach Anspruch 1, bei dem das erwähnte Harz aus Hart-Polyvinylchlorid besteht.

3. Verfahren nach Anspruch 2, bei dem die Temperatur, bei der die erwähnte Beschickung gemischt und auf die sie erhitzt wird, unter 200°C liegt und die Temperatur, auf die die erwähnte Beschickung abgekühlt wird, unter etwa 60°C liegt.

4. Verfahren nach Anspruch 1, bei dem die Schaufelenden-Geschwindigkeit für den Misch- und Erhitzungsschritt etwa 25 bis 45 m/s beträgt.

5. Verfahren nach Anspruch 1 oder Anspruch 2, bei dem die erwähnte teilchenförmige Harzmischung mindestens einen Zusatzstoff enthält, der aus der Gruppe ausgewählt ist, die aus Verarbeitungshilfsmitteln, Schmiermitteln, Stabilisatoren, Antioxidationsmitteln, Mitteln zum Modifizieren der Schlagzähigkeit, Füllstoffen und Pigmenten besteht.

6. Verfahren nach Anspruch 1, bei dem der Misch- und Erhitzungsschritt weniger als etwa 20 s dauert.

7. Verfahren nach Anspruch 1, bei dem der Abkühlungsschritt weniger als etwa 40 s dauert.

7

8. Verfahren nach Anspruch 1, bei dem der Misch- und Erhitzungsschritt und der Abkühlungsschritt in demselben Hochleistungs-Mischer eintreten.

**Revendications**

1. Procédé de fabrication d'un mélange à base de résine polymère particulaire apte à former des articles en matière plastique, suivant lequel on mélange et on conduit un chauffage thermocinétique d'une composition particulaire comprenant une résine polymère thermoplastique, dans un mélangeur à haute intensité présentant une pluralité de pales fixées à des bras rotatifs, afin d'effectuer le mélangeage de la matière et son chauffage à une température élevée au-dessous de la température de début d'agglomération de la composition particulaire, et suivant lequel on refroidit la composition particulaire mélangée et chauffée, dans un mélangeur, jusqu'à une température à laquelle la composition particulaire peut être stockée sans agglomération, caractérisé par le fait que:
durant le cycle de chauffage, on fait tourner les bras du mélangeur à une vitesse des extrémités des pales d'au moins 25 mètres par seconde pendant une période de chauffage de moins de 30 secondes, et qu'on refroidit ensuite la composition particulaire mélangée et chauffée, pendant moins de 100 secondes dans un mélangeur à intensité élevée ayant des pales fixées à des bras tournant dans ledit mélangeur, lesdits bras étant entraînés en rotation à une vitesse des extrémités des pales ne dépassant pas 16 mètres par seconde, ce par quoi le mélange à base de résine polymère particulaire refroidi présente une densité de tassement élevée.

2. Procédé selon la revendication 1, dans lequel la résine comprend du poly(chlorure de vinyle) rigide.

3. Procédé selon la revendication 2, dans lequel la température à laquelle on mélange et on chauffe la charge est inférieure à 200°C, et la température à laquelle on refroidit ladite charge est inférieure à environ 60°C.

4. Procédé selon la revendication 1, dans lequel la vitesse des extrémités des pales se situe dans la plage d'environ 25 à 45 mètres par seconde à l'étape de mélangeage et de chauffage.

5. Procédé selon la revendication 1 ou la revendication 2, dans lequel le mélange à base de résine particulaire comprend au moins un additif choisi parmi les auxiliaires de transformation, les lubrifiants, les stabilisants, les antioxydants, les modificateurs de la résistance au choc, les charges et les pigments.

6. Procédé selon la revendication 1, dans lequel l'étape de mélangeage et de chauffage dure moins d'environ 20 secondes.

7. Procédé selon la revendication 1, dans lequel l'étape de refroidissement dure moins d'environ 40 secondes.

8. Procédé selon la revendication 1, dans lequel l'étape de mélangeage et de chauffage et l'étape de refroidissement ont lieu dans le même mélangeur à haute intensité.